(19) Europäisches Patentamt

European Patent Office

Office européen des brevets

(11) Veröffentlichungsnummer: **0 422 362 A2**

(12) **EUROPÄISCHE PATENTANMELDUNG**

(21) Anmeldenummer: **90115879.0**

(22) Anmeldetag: **20.08.90**

(51) Int. Cl.⁵: **H03K 17/97**

(30) Priorität: **12.10.89 DE 3934159**

(43) Veröffentlichungstag der Anmeldung:
**17.04.91 Patentblatt 91/16**

(84) Benannte Vertragsstaaten:
**AT DE ES GB GR IT**

�["71] Anmelder: **Bosch-Siemens Hausgeräte GmbH
Hochstrasse 17
W-8000 München 80(DE)**

(72) Erfinder: **Beifuss, Wolfgang, Dipl.-Ing.
Eglseer Strasse 5
W-8224 Chieming(DE)**
Erfinder: **Waigand, Helmut, Dipl.-Ing.
Traunstrasse 18 d
W-8225 Traunreut(DE)**

(54) Impulsgenerator für ein mit elektronischen Steuer- und Anzeigeeinrichtungen ausgestattetes Haushaltgerät.

㊸ Impulsgenerator für ein mit elektronischen Steuer- und Anzeigeeinrichtungen ausgestattetes Haushaltgerät, insbesondere für eine durch nur ein Bedienelement betätigbare, im Haushaltgerät befindlichen Steuerung, wobei dem Impulsgenerator ein Impulsformer und eine Drehrichtungserkennung nachgeordnet sind, dadurch gekennzeichnet, daß der Impulsgenerator aus mindestens zwei Hall-Magnetgabelschranken (1) und einer die Hall-Magnetgabelschranken (1) taktenden ferromagnetischen Metallblende (6) besteht, wobei die ferromagnetische Metallblende (6) an einem die Hall-Magnetgabelschranken (1) durchlaufenden Impulsrad (7) angeordnet ist.

# Fig.1

# IMPULSGENERATOR FÜR EIN MIT ELEKTRONISCHEN STEUER- UND ANZEIGEEINRICHTUNGEN AUSGE-STATTETES HAUSHALTGERÄT

Die Erfindung bezieht sich auf einen Impulsgenerator für ein mit elektronischen Steuer- und Anzeigeeinrichtungen ausgestattetes Haushaltgerät, insbesondere für eine durch nur ein Bedienelement betätigbare Steuerung einer im Haushaltgerät befindlichen elektronischen Uhr, wobei dem Impulsgenerator ein Impulsformer und eine Drehrichtungserkennung nachgeordnet sind.

Aus der DE-PS 25 40 486 ist es bekannt, Frequenzteiler und Zählvorrichtungen einer elektronischen Uhr über eine Anzeigekorrektur-Einrichtung mit Hilfe eines Impulsgenerators zu betätigen. Der Impulsgenerator ist dabei (Fig. 3 obengenannter Druckschrift) vorwiegend durch mechanische Elemente realisiert. Darüberhinaus ist es bekannt, Impulsgeneratoren mit Wandlerelementen auszustatten, die auf dem Piezoeffekt, optischen Lichtschranken oder elektromagnetischen Effekten beruhen.

Aufgabe der Erfindung ist es, einen Impulsgenerator für ein mit elektronischen Steuer- und Anzeigeeinrichtungen ausgestattetes Haushaltgerät zu schaffen, wobei der Impulsgenerator weitgehend durch integrierte elektronische Technik realisiert ist und möglichst als Kompaktbaustein aufbaubar ist.

Die erfindungsgemäße Anordnung zur Lösung dieser Aufgabe ist dadurch gekennzeichnet, daß der Impulsgenerator aus mindestens zwei Hall-Magnetgabelschranken und einer die Hall-Magnetgabelschranken taktenden ferromagnetischen Metallblende besteht, wobei die ferromagnetische Metallblende an einem die Hall-Magnetgabelschranken durchlaufenden Impulsrad angeordnet ist.

Eine vorteilhafte Ausgestaltung der Erfindung ist dadurch gekennzeichnet, daß die Hall-Magnetgabelschranke als dem Impulsrad angepaßter Kompaktbaustein ausgeführt ist und aus einem Hall-Element, einem Magneten, einer unmagnetisierbaren Halterung und zwei Magnetfluß-Leitstücken besteht. Weitere vorteilhafte Ausgestaltungen der Erfindung sind in den Unteransprüchen enthalten.

Ausführungsbeispiele nach der Erfindung sind im folgenden anhand der Zeichnung beschrieben. Es zeigt:

Fig. 1 eine Prinzipskizze für das Auftreten des Hall-Effekts,

Fig. 2a eine Anordnung für eine Hall-Magnet-Gabelschranke,

Fig. 2b eine Hallmagnet-Gabelschranke mit Magnetflußverlauf $\phi$ beim Durchlauf einer ferrogmagnetischen Metallblende,

Fig. 2c eine Hall-Magnet-Gabelschranke mit Magnetfluß $\phi$ ohne ferromagnetische Metallblende,

Fig. 3a eine Ausführungsform eines Impulsgenerators mit Hall-Magnet-Gabelschranke,

Fig. 3b ein Rechtslauf-Impulsdiagramm für den Impulsgenerator gemäß Fig. 3a,

Fig. 3c ein Linkslauf-Impulsdiagramm für den Impulsgenerator gemäß Fig. 3a.

Bevor die Ausführungsbeispiele anhand der Zeichnung näher beschrieben werden, werden einige den Hall-Effekt und seine technische Anwendung betreffende Aus führungen vorangestellt. Der Hall-Effekt tritt ein, wenn eine stromführende Leiterfläche von einem dazu senkrecht verlaufenden Magnetfeld durchdrungen wird. Durch die Verdrängung der Ladungsträger entsteht an den Rändern des Leiters quer zur Stromrichtung und senkrecht zu magnetischen Feldrichtung eine Potential-Differenz, die Hall-Spannung. Diese ist dem Produkt Aus Stromstärke I und magnetischer Flußdichte B proportional,

$$U_H = R_H \cdot \frac{B \cdot I}{d} \cdot$$

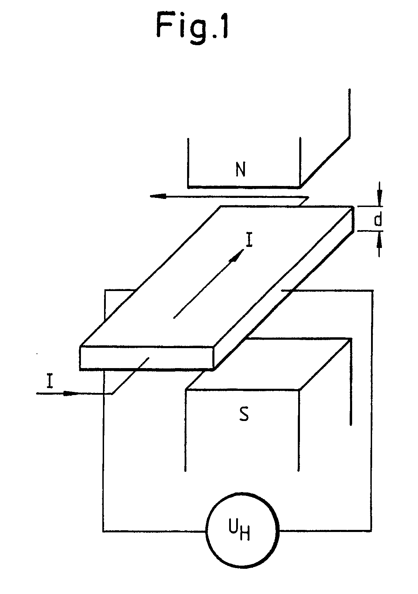

In den sogenannten intermetallischen Halbleitern, und zwar in Verbindungen von Indium mit Antimon und von Indium mit Arsen wurden Stoffe gefunden, die eine sehr große Hall-Konstante haben. Da diesen Stoffen außerdem eine sehr hohe Elektronenbeweglichkeit zu eigen ist, kann man bei ihnen den Hall-Effekt technisch ausnützen, beispielsweise für Hall-Generatoren. Die in Hall-Sensoren integrierte Konstant-Stromquelle sorgt für einen linearen Zusammenhang zwischen Flußdichte und Hall-Spannung. Generell wird einem linearen Hall-Sensor ein temperatur-kompensierter Meßverstärker nachgeschaltet. Eine hohe Meßempfindlichkeit ermöglicht eine gute Auswertung der Ausgangsspannung. Gemäß Fig. 1 ist eine zur Beschreibung des Hall-Effekts gewählte Anordnung dargestellt. Ein dünnes Metallband von der Dicke d wird in der Längsrichtung von dem Gleichstrom I durchflossen. Wird nun das Metallband einem starken Magnetfeld mit der Induktion B senkrecht zur Bandebene ausgesetzt, dann entsteht quer zur Längsrichtung des Leiters eine Spannung, die durch das Voltmeter über $U_H$ angezeigt wird. Dies ist dadurch zu erklären, daß auf die in dem Metallband fließenden Elektronen eine magnetische Kraft (Lorenz-Kraft) quer zum Strom und zum Magnetfeld einwirkt, die die Elektronen von den Ionen trennt und dadurch eine elektrische Querfeldstärke zur Folge hat. Die in der Querrichtung des Metallbandes gemessene Hall-Spannung folgt dabei dem Gesetz

$$U_H = R_H \cdot \frac{B \cdot I}{d} \cdot$$

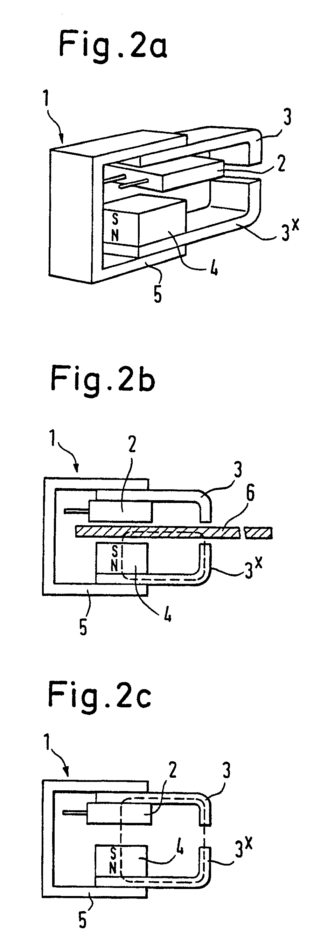

Das Auftreten des Hall-Effektes ist dabei bei vielen Metallen sehr unterschiedlich für z.B. Kupfer, Silber, Gold ist der entstehende Effekt sehr klein für beispielsweise Indium, dotiert mit Antimon und Arsen hingegen groß. Gemäß Fig. 2a ist eine Anordnung für eine Hall-Magnet-Gabelschranke 1 dargestellt. Die Hall-Magnet-Gabelschranke besteht aus einem Hall-Element 2, einem unteren Magnetflußstück 3, einem oberen Magnetflußstück 3', einem Magneten 4 und einer unmagnetischen Halterung 5. Zweckmäßigerweise wird das Hall-Element 2 als Baustein ausgeführt, in dem ein Analogverstärker, ein Impulsformer und ggf. ein Schaltverstärker integriert ist. Die beiden Magnetflußstücken 3, 3' sind Weicheisenelemente. Der Magnet 4 ist zweckentsprechend als würfelförmiger Dauermagnet ausgebildet und besitzt eine hohe Langzeitkonstanz. Die unmagnetische Halterung 5 kann eine nicht-ferromagnetische metallische Halterung sein, zweckmäßigerweise bietet sich aber eine Kunststoffhalterung an. Dabei ist ein Kunststoffverguß bzw. Kunstharzverguß als konstruktives Detail der unmagnetischen Halterung 5 möglich. Gemäß Fig. 2b ist die Hall-Magnet-Gabelschranke 1 beim Durchlauf einer ferromagnetischen Metallblende 6 dargestellt. Befindet sich die ferromagnetische Metallblende 6, die im Anmeldungsfall Bestandteil eines Impulsrades 7 ist, auf die gemäß Fig. 2b dargestellte Weise zwischen dem Magneten 4 und dem Hall-Sensor 2, so wird der Magnetfluß $\phi$ über die ferromagnetische Metallblende 6 kurzgeschlossen. Im Hall-Sensor 2 sinkt die Induktion unter den Wert der Ausschalt-Induktion und die Ausgänge des Hall-Sensors 2 besitzen den Schaltzustand "gesperrt".

Fig. 2c zeigt eine Hall-Magnet-Gabelschranke 1 ohne ferromagnetische Metallblende 6. Der Magnetfluß 0 schließt sich, ausgehend vom Nordpol des Magneten 4 über das Magnetflußstück 3', das zweite Magnetflußstück 3, den Hall-Sensor 2 nach dem Südpol des Magneten 4. Der Hall-Sensor 2 erhält soviel Induktion, daß die Einschaltinduktion überschritten wird. Die Ausgänge des Hall-Sensors 2 besitzen den Schaltzustand "durchgeschaltet". Somit läßt sich über die konstruktive Ausgestaltung der Peripherie des Impulsrades 7 und die verwendete Drehzahl n eine variable Impulsfrequenz abfühlen. Die Anordnung der Hall-Magnet-Gabelschranke 1 und des Impulsrades 7 stellt daher einen Impulsgenerator mit variabler Frequenz dar.

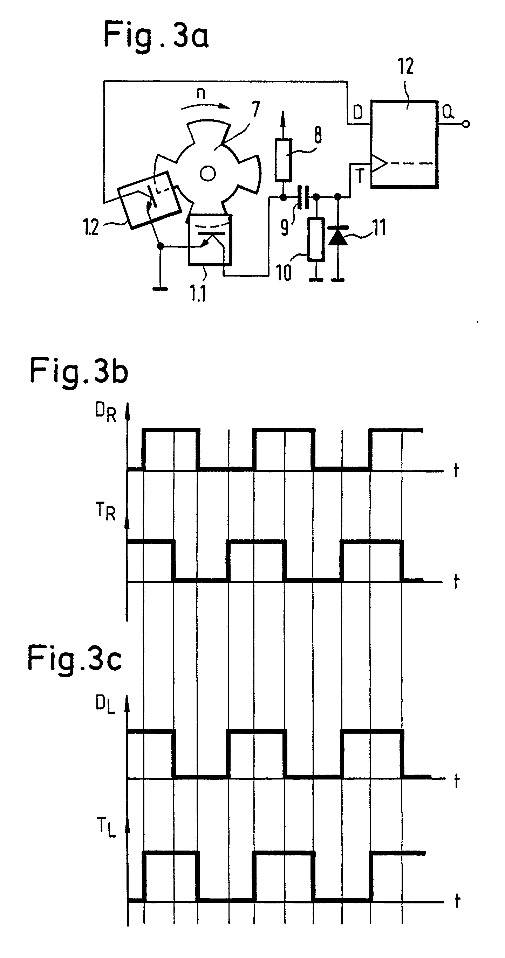

Gemäß Fig. 3a ist die Hall-Magnet-Gabelschranke 1 mit dem Impulsrad 7, das sowohl manuell als auch mechanisch angreifbar ist, dargestellt. Dabei sind am Impulsrad 7 vier symmetrisch angeordnete, ferromagnetische Metallblenden 6 dargestellt. Zwei Hall-Magnet-Gabelschranken 1.1 und 1.2 sind so justiert, daß die an den jeweiligen Ausgängen entstehenden Signalfolgen mit einer Phasenverschiebung von $\pi/2$ zueinander behaftet sind. Die Ausgangssignal-Leitung der Hall-Magnet-Gabelschranke 1.1 ist auf ein Netzwerk geführt, das auch im Hall-Sensor-Baustein 2 integriert sein kann. Dabei sind ein ohm'scher Widerstand 8 und eine Kapazität 9 parallel geschaltet. Die Kapazität 9 dient zur Phasenverschiebung des Taktsignals. Eine der Kapazität 9 nachfolgende Parallelschaltung eines ohm'schen Widerstandes 10 und einer Diode 11 stellt eine Impulsformstufe dar. Das so behandelte Ausgangssignal der Hall-Magnet-Gabelschranke 1.1 ist nach Durchlaufen dieses Netzwerkes auf den Takteingang eines D-Flip-Flops 12 geschaltet. Der Ausgang der Hall-Magnet-Gabelschranke 1.2 ist auf den statischen Eingang des gleichen D-Flip-Flops 12 geschaltet. Gemäß Fig. 3b ist die Impulsfolge, die bei Rechtslauf des Impulsrades 7 an den Eingängen D, .T des D-Flip-Flops 12 anliegt, angegeben. Für diese Eingangsbelegung ergibt sich am Ausgang Q des D-Flip-Flops 12 ein Lowpegel. Für den Linkslauf des Impulsrades 7 sind die äquivalenten Impulsfolgen der Fig. 3c entnehmbar. Bedingt durch die Gestaltung des Impulsrades 7 unter der zugehörigen Justage der Hall-Magnetgabel-Schranke 1 sind die Impulsfolgen $D_R$ und $D_L$ um $\pi/2$ phasenverschoben. Gleiches gilt für die Impulsfolgen $T_R$ und $T_L$.

Unter diesen schaltungstechnischen Gegebenheiten ist ersichtlich, daß für die Folgen $D_L$, $T_L$ gemäß Fig. 3c der Ausgang Q des D-Flip-Flops 12 einen Highpegel führt. Es gilt stets $Q_L = Q_R$ ($Q_R$ invertiert) Grundsätzlich sind andere Impulsräder mit entsprechend justierten Hall-Magnetgabelschranken denkbar, um Links- und Rechtslauf zu entschlüsseln. Es ist dabei jedoch eine kompliziertere elektronische Auswertung in Kauf zu nehmen, als es die erfindungsgemäße Lösung anbietet.

**Ansprüche**

1. Impulsgenerator für ein mit elektronischen Steuer- und Anzeigeeinrichtungen ausgestattetes Haushaltgerät, insbesondere für eine durch nur ein Bedienelement betätigbare, im Haushaltgerät befindlichen Steuerung, wobei dem Impulsgenerator ein Impulsformer und eine Drehrichtungserkennung nachgeordnet sind, **dadurch gekennzeichnet**, daß der Impulsgenerator aus mindestens zwei Hall-Magnetgabelschranken (1) und einer die Hall-Magnetgabelschranken (1) taktenden ferromagnetischen Metallblende (6) besteht, wobei die ferromagnetische Metallblende (6) an einem die Hall-Magnetgabelschranken (1) durchlaufenden Impulsrad (7) angeordnet ist.

2. Impulsgenerator nach Anspruch 1, dadurch gekennzeichnet, daß die Hall-Magnetgabelschranke (1) als dem Impulsrad (7) angepaßter Kompaktbaustein ausgeführt ist und aus einem Hall-Element (2), einem Magneten (4), einer unmagnetisierbaren Halterung (5) und zwei Magnetflußleitstücken (3, 3') besteht.

3. Impulsgenerator nach Anspruch 1, 2, dadurch gekennzeichnet, daß das Hall-Element (2) als Baustein im Verbund mit einem Analogverstärker, Impulsformer und ggf. mit einem Logiktreiber ausgestattet ist.

4. Impulsgenerator nach Anspruch 1, 2, dadurch gekennzeichnet, daß der Magnet (4) als ein würfelförmiger Dauermagnet mit hoher Langzeitkonstanz ausgebildet ist.

5. Impulsgenerator nach Anspruch 1, 2, dadurch gekennzeichnet, daß die Magnetflußstücke (3, 3') und die ferromagnetische Metallblende (6) aus Weicheisen bestehen.

6. Impulsgenerator nach Anspruch 1, 2, dadurch gekennzeichnet, daß die unmagnetische Halterung (5) eine metallische Halterung ist.

7. Impulsgenerator nach Anspruch 1, 2, dadurch gekennzeichnet, daß die unmagnetische Halterung (5) als Kunststoffverguß ausgeführt ist.

8. Impulsgenerator nach Anspruch 1, dadurch gekennzeichnet, daß das Impulsrad (7) sowohl manuell als auch maschinell antreibbar ist.

9. Impulsgenerator nach Anspruch 1, dadurch gekennzeichnet, daß das Impulsrad (7) vier um jeweils $\pi/2$ versetzte, symmetrisch angeordnete gleiche ferromagnetische Metallblenden (6) besitzt.

10. Impulsgenerator nach Anspruch 1, dadurch gekennzeichnet, daß die beiden Hall-Magnetgabelschranken (1.1, 1.2) so justiert sind, daß sich um $\pi/2$ phasenverschobene Ausgangs-Impulsfolgen ergeben.

# Fig.1

# Fig.2a

# Fig.2b

# Fig.2c

## Fig.3a

## Fig.3b

## Fig.3c